Europäisches Patentamt

(19) European Patent Office

Office européen des brevets

(11) Publication number: **0 197 822**
**B1**

## (12) EUROPEAN PATENT SPECIFICATION

(45) Date of publication of patent specification: **01.06.88**

(21) Application number: **86400562.4**

(22) Date of filing: **17.03.86**

(51) Int. Cl.⁴: **A 23 L 1/236,** A 23 L 1/164

(54) Compositions and processes for sweetening cereal.

(30) Priority: **28.03.85 US 717014**

(43) Date of publication of application:
**15.10.86 Bulletin 86/42**

(45) Publication of the grant of the patent:
**01.06.88 Bulletin 88/22**

(84) Designated Contracting States:
**AT BE CH DE FR GB IT LI LU NL SE**

(56) References cited:
**US-A-3 947 600**
**US-A-3 955 000**
**US-A-4 079 151**
**US-A-4 501 759**

(73) Proprietor: **NABISCO BRANDS INC.**
**Nabisco Brands Plaza**
**Parsippany New Jersey 07054 (US)**

(72) Inventor: **Karwowski, Jan**
**705 Ewing Avenue**
**Franklin Lakes New Jersey 07417 (US)**
Inventor: **Brede, Patricia Marie**
**9 Brookfield Way**
**Mendham New Jersey 07945 (US)**

(74) Representative: **Bonnetat, Christian et al**
**Cabinet PROPI Conseils 23 rue de Léningrad**
**F-75008 Paris (FR)**

Courier Press, Leamington Spa, England.

# 0 197 822

**Description**

This invention relates to compositions and processes for sweetening cereals. More specifically, this invention relates to a solid sweetening composition containing an L-aspartic acid sweetening derivative, a process for the production of this sweetening composition, a process for the use of this sweetening composition in sweetening a cereal, and the resultant sweetened cereal composition.

The ready availability of a variety of highly flavorful food products coupled with the relatively sedentary life style of a large segment of the population has given rise to excess accumulation of calories in most citizens. Estimates indicate that about 40 percent of the U.S. population may be overweight. J. J. Beereboom, *CRC Critical Reviews in Food Science and Nutrition*, pages 401—413 (May 1979). Consequently an increasing number of consumers are practicing some form of dieting and monitoring of calorie intake. This is shown by the rapid growth and successful introduction of a variety of reduced calorie products, such as cake mixes, beers, wines, pizzas, candies, sodas, margarines and cookies, etc. into the food market.

One major source of calories in a conventional diet is sugar (sucrose) which is present in a wide variety of foods. Accordingly, in order to reduce the calorie content of many foods it is necessary to reduce the sucrose content thereof. In addition to calorie reduction, the reduction or elimination of sucrose in many foodstuffs is desirable because of the association of sucrose with dental caries, diabetes and other medical complaints.

The sucrose content of many foods can be lowered or eliminated by replacement of the sucrose with artificial sweeteners which possess the sweet taste of sucrose but which are essentially calorie-free. One type of artifical sweetener frequently used to replace sucrose is L-aspartic acid sweetening derivatives. These L-aspartic acid sweetening derivatives comprise small peptides (usually dipeptides) containing L-aspartic acid, or the esters of these peptides. Such L-aspartic acid sweetening derivatives are disclosed, *inter alia*, in U.S. Patent 3,492,131 to Schlatter, U.S. Patent 3,642,491, also to Schlatter, U.S. Patent 3,695,898 to Hill et al and U.S. Patent 3,714,139 to Schlatter. U.S. Patent 3,799,918 to Mazur describes the use of L-aspartic acid sweetening derivatives as sweetening agents for a wide variety of food products, including milk products, confections, bakery products, cereal, carbonated beverages, syrups, fruits, juices and the like. The L-aspartic acid most frequently used in foods is L-aspartyl-L-phenylalanine methyl ester, also known as aspartame, which is sold commercially by G. D. Searle & Co., Chicago, Illinois, under the registered trademark Nutra Sweet. Aspartame is approved for use in foodstuffs by the Food and Drug Administration.

L-aspartic acid sweetening derivatives have been estimated to have a sweetness about 100 to 200 times greater than the sweetness of sucrose on a weight-to-weight basis. Accordingly, the amount of L-aspartic acid sweetening derivative needed to replace sucrose and maintain the same sweetness level in foodstuffs is very small and if the L-aspartic acid sweetening derivative, which in its pure form is a fine white powder, is simply added as the dry powder to foodstuffs it is often difficult to ensure a sufficiently uniform distribution of the sweetening derivative throughout the foodstuff. Localized concentrations of the sweetening derivative in the foodstuff lead to the so-called "hot spots" which are small patches having an intense sweet flavor. The low solubility of the sweetening derivatives (for example, aspartame is only soluble to the extent of 1 percent in water at room temperature) has been indicated as contributing to the non-uniformity of dispersion of the derivatives on the surface of foodstuffs.

In addition to the formation of hot spots, the use of L-aspartic acid sweetening derivatives in foodstuffs has been hindered by other problems. The sweetening derivatives are prone to undergo a loss of sweetness in the presence of moisture, rendering them essentially non-functional in many food applications. Many processes to stabilize these L-aspartic acid derivatives into a form whereby they do not undergo degradation with accompanying loss of sweetness under storage conditions are known in the art. These processes typically involve encapsulating or coating particles of the L-aspartic acid derivative with various edible coating materials followed by drying and granulation.

For example, in U.S. Patent 3,962,468, particles of L-aspartic acid derivatives are stabilized in a dry fixation by causing a slurry-forming level of undissolved hydrated particles of the sweetening compound to be dispersed in an aqueous dextrin solution as discretely distributed undissolved particles and drying the dispersion to encapsulate the particles of the L-aspartic acid derivative in the dextrin.

In U.S. Patent 4,004,039, L-aspartyl-L-phenylalanine methyl ester crystals are stabilized into a particulate form so as to be free-flowing with other powdered materials. The stabilization process involves admixing the crystals with a matrix-forming material such as dried coffee extract, whey, low dextrose equivalent starch polymers and protein extracts, heating the admixture to form a melt, in which the ester crystals are discretely distributed, calendering the melt between two rollers to submerge the crystals in the melt, cooling the melt, and then granulating the product to produce particles which encapsulate the crystals distributed therein. In lieu of the roll-fusing operation, other means, such as extrusion apparatus, capable of generating frictional heat to effect fusion through the work generated by the auger, can be used to effect fusion. Roller fusing is preferred because it is easier to control the moisture content of the mix.

In U.S. Patent 3,934,048, dipeptide sweeteners such as L-aspartyl-L-phenylalanine methyl ester are imparted with a satisfactory rate of solubility and storage stability due to low hygroscopicity by co-drying a solution of the dipeptide and an edible, bland, low calorie polysaccharide.

2

The processes disclosed in U.S. Patents 3,962,468, 4,004,039, and 3,934,048 all relate to the production of powdery or granular compositions. This type of composition is also disclosed in the above-mentioned U.S. Patent 3,799,918. In the latter patent, a dry sweetening product is produced by combining a mixture of an alpha-aspartyl-alpha-alkyl aliphatic amino acid dipeptide and hydrolyzed cereal solids having a low dextrose equivalent with water and then spray drying.

Another problem which has limited the use of L-aspartic acid derivatives as a substitute for sugar in certain foods is their thermal instability. For example, aspartame has limited use due to its potential to decompose upon exposure to heat into diketopiperazine (DKP), for example, resulting in a reduction of sweetening power. Aspartame, as well as other heat sensitive L-aspartic acid derivative sweeteners, have therefore been considered unsuitable as a replacement for sugar in products that are neutral in reaction or which must be exposed to high temperatures during processing. Unfortunately, many of the foods that could benefit from a reduction in sucrose levels, such as baked goods or presweetened cereals, fall into these categories. To sweeten baked goods or ready-to-eat cereal products with aspartame, resort has been made to coating processes wherein the aspartame is not subjected to conventional baking temperatures and times.

One important type of foodstuff which frequently contains substantial quantities of sucrose is cereal products, such as breakfast cereals. Unsweetened cereal products often tend to have a rather bland taste, so substantial quantities of sucrose are added to many cereals in order to make them more attractive to consumers, especially children. Reduction of the sucrose content of cereals is desirable for the same reasons as in other foodstuffs. Moreover, because breakfast cereals are frequently immersed in milk before consumption and the milk will tend to dissolve a large proportion of any sucrose coating on the cereal, the problems of cariogenicity associated with sucrose tend to be worse in the case of sucrose-coated cereals then in other foods.

The incorporation of L-aspartic acid sweetening derivatives into cereals suffers from the same problems as incorporation of these derivatives into other foodstuffs. Moreover, some of the problems are exacerbated by the physical form of cereals. For example, if one attempts to sweeten a breakfast cereal in the form of flakes by mixing the dry cereal flakes with dry pulverulent aspartame, the aspartame tends to lump together to form relatively large particles of pure aspartame, which are perceived as intense hot spots by the consumer and which render the product unacceptable.

Attempts have been made in the prior art to sweeten cereals with L-aspartic acid sweetening derivatives in manner which overcomes the hot spot and other problems which occur when the dry sweetening derivative is simply mixed with the dry cereal. For example, U.S. Patent 4,079,151 to Schade et al. describes a process for applying L-aspartic acid sweetening derivatives to foodstuffs, including breakfast cereals. In this process, a carrier solution is formed containing the sweetening derivative and an encapsulating colloid, typically a maltodextrin or equivalent water-soluble polyhydric starch moiety, and this solution is sprayed on to the foodstuff while causing a portion of the solvent to evaporate from the solution so that the sweetener and the carrier therefore are deposited as discrete moieties on the surface of the foodstuff. The coating operation is then continued to cause the moieties of sweetner and carrier to merge with one another and produce a foamy coating. Finally the excess solvent is removed from the foamy coating to produce a foodstuff having a frosted appearance.

In U.S. Patent 3,955,000 to Baggerly, cereal products, baked goods, such as pastry mixes, and confectionary foodstuffs intended to be sweetened with the sensation of sucrose are coated with an L-aspartic acid derivative, such as the methyl ester of L-aspartyl-L-phenylalanine. The derivatives are admixed in aqueous suspension with hydrolyzed amylaceous derivatives comprising predominantly oligosaccharide solids having a low dextrose equivalency, of about less than about 30, and applied as a coating solution to the comestible. A coating of the dried solution, it is disclosed, smoothes out the taste impact generated by any sweetening imbalance attributable to the incomplete solution of the L-aspartic acid derivative or non-uniformity of its dispersion. The uniform distribution of sweetness, such that when the foodstuff is eaten "hot spots" are minimized, is attributed principally to the starch hydrolyzate.

In the process of U.S. Patent 3,955,000, the coating solution is maintained at a temperature below 200°F (93.3°C) so as to have the sweetening derivative dispersed therein as undissolved hydrated particles. The solution is applied to the foodstuff by atomization or other spray techniques. The coated comestible, it is disclosed, is dried at product temperatures which do not exceed 200°F (93.3°C) in order to assure that the sweetening compound is not degraded while the coated comestible is dried to a stable moisture content of below about 8 percent.

The coating processes of U.S. Patents 3,955,000 and 4,079,151 results in products which have a frosted or glazed appearance to make the product look sugar coated. Other substances, such as fats and starches, it is disclosed, can be incorporated in the coating to create a dull or crystalline appearance suggestive of other sweetened cereal applications. However, the appearance of a sugar coating, whether glazed or dull, is associated with an undesirable amount of sugar by many consumers.

Moreover, both processes require that the sweetening derivatives be formed into a liquid solution or suspension, applied to the cereal in liquid form, and the solvent evaporated to yield the final coating. To evaporate the coating it is necessary to heat the cereal and although Patent 3,955,000 states that such heating can be effected so that the sweetening compound is not degraded, in general any heating of the L-aspartic acid sweetening derivative is undesirable. In addition, the processes described in these two patents necessarily introduce substantial amounts of water on to the cereal with the sweetening derivative, and with some types of cereal it may be difficult to remove all the water thus introduced, and the wetting and subsequent drying of the cereal may change the texture of the cereal. Finally, any process requiring introduction of the sweetening derivative in the form of an aqueous solution or suspension, followed by drying of the treated cereal, demands a substantial amount of additional plant and equipment and adds both to the capital and running costs of the process.

Thus, there is a need for a process for sweetening a cereal with a L-aspartic acid sweetening derivative which does not require introduction of the sweetening derivative in liquid form, followed by drying of the treated cereal, and this invention provides such a process.

This invention provides a process for producing a sweetened edible cereal composition. This process comprises mixes a pulverulent L-aspartic acid sweetening derivative with a substantially dry maltodextrin having an average particle size larger than about 200 U.S. mesh, and thereafter mixing the resultant substantially dry L-aspartic acid sweetening derivative/maltodextrin mixture with a flaked edible cereal to produce the sweetened edible cereal composition.

This invention also provides a sweetened cereal composition comprising a substantially dry mixture of particles of a flaked edible cereal and discrete sweetening particles, the sweetening particle comprising a maltodextrin having an average particle size larger than about 200 U.S. mesh and a pulverulent L-aspartic acid sweetening derivative adhering to the maltodextrin.

This invention also provides process for preparing a sweetening composition, this process comprising mixing a pulverulent L-aspartic acid sweetening derivative with a substantially dry maltodextrin having an average particle size larger than about 200 U.S. mesh.

Finally, this invention provides a solid sweetening composition comprising a substantially dry maltodextrin having an average particle size larger than about 200 U.S. mesh, and a pulverulent L-aspartic acid sweetening derivative coated on the surfaces of the maltodextrin particles.

Those skilled in the art of polysaccharide technology are aware that in practice it is effectively impossible to remove all water from maltodextrins and other polysaccharides. However, provided a maltodextrin is free of liquid water on the surfaces of the particles, it remains dry to the touch and in the form of a free-flowing powder, even though it may still have a substantial moisture content. The term "substantially dry maltodextrin" is used herein to denote a maltodextrin which is free of liquid water on its surface and which is thus a free-flowing solid. The moisture contents of such substantially dry maltodextrins can be quite substantial; for example, the preferred Maltrin (registered trademark) M500 maltodextrin discussed below may have a moisture content of up to about 13 percent by weight and still remain substantially dry and in the form of free-flowing granules.

In the processes and compositions of the present invention, the L-aspartic acid sweetening derivative is mixed with a maltodextrin having an average particle size larger than about 200 U.S. mesh. It has been found that this mixing of the sweetening derivative with the maltodextrin causes the sweetening derivative to adhere to the maltodextrin. Consequently, when the mixture of maltodextrin and sweetening derivative is added to an edible cereal, the maltodextrin acts as a carrier for the sweetening derivative and prevents lumping and localized high concentrations of the sweetening derivative, thereby avoiding the formation of hot spots in the sweetened edible cereal. The present invention enables the L-aspartic acid sweetening derivative to be incorporated into the cereal in a completely dry process which is simple to effect and which avoids the need for the spraying and drying equipment needed to carry out the prior art processes discussed above.

Maltodextrins are commercially-available products produced by hydrolysis of starch (normally corn starch) and are extensively discussed in the literature. See, for example:

Hackh's Chemical Dictionary, third edition, the Blakiston Company, Philadelphia (1944), pages 11, 53, 262, 313, 383 and 510;

DeMan, J., Principles of Food Chemistry, AVI Publishing Company, Inc., Westport, Connecticut (1980) pages 154—155;

Pancoast, H. M. et al, Handbook of Sugars, AVI Publishing Company, Inc., Westport, Connecticut (1980), pages 154—155, 168, 281—284, 286, 409—410, 422, 532 and 595;

Radley, J. A., Starch and its Derivatives, Wiley, New York, New York, Third Edition (1954), volume 1, pages 52—53, 57, 114—117, 120—121, 224—235, 278—279, 282—283, 286—297, 380—381, 396—397, 418—337 and 468—469;

Pringsheim, H., The Chemistry of the Monosaccharides and of the Polysaccharides, McGraw-Hill, New York, New York, (1932), page 271—295;

Lineback, D. R. and Inglett, G. E., Food Carbohydrates, AVI Publishing Company, Inc., Westport, Connecticut (1982), pages 257—258, 260 and 268;

Matz, S., Cereal Technology, AVI Publishing Company, Inc., Westport, Connecticut (1970), pages 186 and 188;

Rose, A. and Rose, E., The Condensed Chemical Dictionary, fifth edition, Reinhold, New York, New York (1956), page 350;

The Merck Index, Merck and Company, Inc., Rahway, New Jersey, eighth edition, (1968), page 355;

Ockerman, H., Sourcebook for Food Scientists, AVI Publishing Company, Inc., Westport, Connecticut (1978), pages 89, 797 and 832;

Whistler, R. L. and Paschall, E. F. (Editors) Starch: Chemistry and Technology, Academic Press, New York, New York (1967) Volume II, pages 253—278;

Radley, J. A., Industrial Uses of Starch and its Derivatives, Applied Science Publishers Ltd., London, England (1967) pages 96—97 and 106;

Kerr, R. W., Chemistry and Industry of Starch, Academic Press, New York, New York, second edition (1950), pages 210—215, 240—243, 345—373, 412—417 and 443—453; and

Banks, W., and Greewood, C. T., Starch and its Components, Edinburgh University Press, Scotland (1975).

As described in the above references, maltodextrins are produced by hydrolysis, normally enzymatic hydrolysis, of starch. The degree of hydrolysis effected in the starch starting material to produce a particular maltodextrin is conventionally measured as the dextrose equivalent (DE) of the maltodextrin. The higher the dextrose equivalent of a maltodextrin, the greater the degree of hydrolysis of the starch and the lower the average molecular weight of the maltodextrin. The dextrose equivalent of maltodextrins range from about 4 to about 25.

Empirically, it has been found that the most important factor affecting the suitability of a maltodextrin for use in the processes and compositions of the present invention is the particle size of the maltodextrin. The maltodextrin used in the processes and compositions of the invention has a particle size larger than about 200 U.S. mesh; maltodextrins having smaller average particle sizes do not act satisfactorily as carriers for the L-aspartic acid sweetening derivative and may lead to the formation of hot spots in the sweetened cereal composition. Maltodextrins having the requisite particle size for use in the present invention are available commercially and are known as agglomerated maltodextrins. The best carriers for the sweetening derivative have been found to be maltodextrins comprising at least about 80 percent by weight of particles larger than about 200 U.S. mesh.

Furthermore, it is advantageous for the maltodextrin to contain a substantial amount of particles significantly larger than 200 U.S. mesh; preferably, the maltodextrin should comprise at least about 20 percent by weight of particles larger than 60 U.S. mesh.

When the sweetened cereal composition containing the L-aspartic acid sweetening derivative/ maltodextrin sweetening agent is mixed with milk immediately prior to consumption, the maltodextrin and sweetening derivative both dissolve in the milk, thereby spreading the sweet taste of the sweetening derivative throughout the mixture of cereal and milk. It is desirable to avoid the use of maltodextrins containing a high proportion of large particles since such large particles may dissolve only slowly and may affect the mouthfeel of the mixture of cereal and milk during its consumption. Accordingly, it is preferred that the maltodextrin not contain more than about 20 percent by weight of particles greater than 20 U.S. mesh, and the proportion of such large particles is preferably smaller than 20 percent.

The use of maltodextrins having very low dextrose equivalents, and thus high average molecular weights, should be avoided since such low dextrose equivalent maltodextrins do not dissolve rapidly in water. It has been found that maltodextrins having dextrose equivalents of about 7 to about 15 dissolve rapidly in water and such maltodextrins are thus preferred for use in the instant processes and compositions. Best results are obtained using maltodextrins having dextrose equivalents of about 9 to about 12. The rate of the solution of the maltodextrin is also affected by its bulk density, maltodextrins with low bulk density giving high rates of dissolution. To allow rapid dissolution of the maltodextrin, it is preferred that the maltodextrin used in the present invention have a bulk density not greater than about 0,32 g/cm$^3$ (20 pounds per cubic foot) (bulk specific gravity less than about 0.32).

A specific preferred, commercially-available agglomerated maltodextrin for use in the the processes and compositions of the present invention is Maltrin M500, available from Grain Processing Corporation, Muscatine, Iowa 52761. This agglomerated maltodextrin is a bland, white, free-flowing carbohydrate having low sweetness and is very rapidly soluble in water to produce clear solutions at concentrations up to 40 to 50 percent by weight. The maltodextrin has a dextrose equivalent of 9.0 to 12.0, a maximum moisture content (as supplied by the manufacturer) of 6.0 percent, a pH of 4.0 to 5.1 and a bulk density of 0,21 to 0,3 g/cm$^3$ (13 to 19 pounds per cubic foot) (bulk specific gravity 0.21 to 0.30). The maltodextrin contains a maximum of 10 percent by weight of particles larger than 20 U.S. mesh and at least 90 percent by weight of particles larger than 200 U.S. mesh. We have found that a typical sample of this material contains 10 percent by weight of particles larger than 20 U.S. mesh, at least 10 percent by weight of particles in the range of 20—40 U.S. mesh and at least 18 percent by weight of particles in the range of 40—60 U.S. mesh. According to the manufacturers, the material comprises 0.5 percent of monosaccharides, 2.7 percent of disaccharides, 4.3 percent of trisaccharides, 3.7 percent of tetrasaccharides and 88.8 percent of penta- and higher polysaccharides. As previously mentioned, Maltrin 500 can absorb up to 13 percent of moisture and still remain substantially dry and in the form of free-flowing granules.

In the processes and compositions of the present invention, sufficient maltodextrin must be mixed with L-aspartic acid sweetening derivative to ensure effective carrying of the sweetening derivative by the maltodextrin, thus avoiding the formation of hot spots in the sweetened cereal composition. Also, the "dilution" of the relatively small amount of sweetening derivative needed in a typical sweetened cereal composition with a much larger quantity of maltodextrin makes it easier to ensure that the sweetening derivative is properly mixed with, and uniformly dispersed throughout, the sweetened cereal composition. On the other hand, since the maltodextrin is effectively an inert carrier for the sweetening derivative and

# 0 197 822

does not contribute significantly to the properties of the final cereal composition, use of too high a ratio of maltodextrin to L-aspartic acid sweetening derivative results in excessive consumption of maltodextrin and increased costs without any corresponding benefit in the properties of the sweetened cereal composition. Accordingly, it is preferred that, in the processes and compositions of the present invention, from about 100 to about 200, and preferably from about 20 to about 100 parts, by weight of maltodextrin be mixed with each part by weight of the L-aspartic acid sweetening derivative i.e. the sweetening composition of the invention desirably comprises from about 0.5 to about 10 percent, most preferably from about 1 to about 5 percent, by weight of the sweetening derivative.

The proportion of L-aspartic acid sweetening derivative used in the sweetened edible cereal composition of the present invention may vary widely with the exact sweetening derivative employed, the taste of the unsweetened edible cereal and the taste which it is desired to produce in the sweetened cereal composition. However, in general levels of sweetness comparable to those achieved in conventional sucrose-sweetened cereal compositions may be achieved using from about 0.05 to about 0.5, and preferably from about 0.1 to about 0.2, percent by weight of the sweetening derivative in the sweetened cereal composition. In view of its known high sweetness and apparent safety, the preferred L-aspartic acid sweetening derivative for use in the processes and compositions of the present invention is aspartame.

The edible cereal used in the processes and compositions of the present invention is in flake form. Such flake form cereal may be, for example, wheat flakes, barley flakes, rolled oat flakes or mixtures thereof. The present invention is especially useful in sweetening so-called "instant oatmeal cereals"; such cereals are based primarily upon rolled oats, the rolled oats comprising in excess of 40 percent by weight of the cereal, usually accompanied by lesser amounts of wheat and barley flakes. Upon addition of milk to such an instant oatmeal cereal, a porridge is produced substantially instantaneously.

When producing a sweetened cereal composition by the processes of the invention, it has been found advantageous to incorporate a polysaccharide starch or gum into the sweetened cereal composition. The polysaccharide starch or gum acts as a binding agent and further assists the dispersion of the sweetening derivative throughout the sweetened cereal composition..To produce the maximum additional binding and dispersing action of the starch or gum, it is preferred that the preparation of the sweetened cereal starch or gum be effected by a three-stage process, the first stage of which comprises the mixing of the maltodextrin with the sweetening derivative. In the second stage, the maltodextrin/sweetening derivative mixture is mixed with the starch or gum. In the third stage, the mixture of maltodextrin, sweetening derivative and starch and/or gum is mixed with the cereal.

The third stage of this process is conveniently effected by feeding appropriate quantities of the maltodextrin-containing blend and the cereal (if a mixture of cereals is to be used, they should first be blended together) to a filling machine such as those conventionally used in the art to place cereal in packages. It has been found that mixing the maltodextrin-containing mixture with the cereal in the mixing machine avoids stratification of the maltodextrin-containing blend (and consequent non-uniformity of sweetness in the final product) and also avoids damage to the flaked cereal which might be produced by mechanical mixing.

The maltodextrin/sweetening derivative mixture may be mixed with a limited quantity of a finely divided cereal in the preblend stage. Such finely divided cereals, which are usually corn cereals, are available commercially and comprise very small flakes typically less than about 10 U.S. mesh in size. (For example, the commercially-available fine corn cereal flakes used in the Examples below contain 20 percent by weight of flakes large than 14 U.S. mesh, 30 percent by weight of flakes in the range 14—20 U.S. mesh, 25 percent by weight of flakes in the range of 20—40 U.S. mesh, 10 percent by weight of flakes in the range of 40—60 U.S. mesh and 15 percent by weight of flakes smaller than 60 U.S. mesh.) This finely divided cereal acts as a further carrier for the maltodextrin/sweetening derivative mixture to assist in dispersion of the mixture uniformly throughout the final cereal composition.

It should be noted that, in the sweetened cereal composition of the present invention, the L-aspartic acid sweetening derivative is not physically bonded to the cereal composition as in the cereal compositions described in the aforementioned U.S. Patents 3,955,000 and 4,079,151. Instead, the sweetening derivative adheres to the surface of the maltodextrin, and the combined sweetening derivative/maltodextrin particles exist as discrete sweetening particles dispersed throughout the cereal composition. Despite the presence of these discrete sweetening particles, it has been found that the cereal composition is free of hot spots.

In addition to the edible cereal, L-aspartic acid sweetening derivative, maltodextrin and polysaccharide starch or gum (if any), the cereal compositions of the present invention may contain a variety of additives similar to those used in prior art cereal compositions. For example, the cereal compositions may include vitamins and minerals, artificial or natural flavoring and coloring ingredients, for example salt, cinnamon, nutmeg, and caramel color, and fruit-flavoring acids such as citric acid and malic acid. The cereal compositions may also contain dried fruit or fruit pieces and nuts or nutmeats, for example, raisins, chopped dates, chopped walnuts and dried apple, peach and strawberry flakes. If the cereal composition is to be prepared by the three-step process previously suggested, it is preferred that vitamins, minerals and minor flavoring and coloring ingredients be incorporated in the second stage, in order to ensure that these minor ingredients are properly dispersed throughout the final cereal composition, while the fruits, fruit pieces and nuts or nut meats are conveniently incorporated in the third stage in order to minimize the amount of mixing to which these relatively fragile ingredients are subjected.

6

The following Examples are now given, though by way of illustration only, to show details of particularly preferred ingredients and techniques used in the processes and compositions of the present invention. All parts and proportions are by weight unless otherwise stated.

Example 1

This Example illustrates the preparation of a sweetened apple-cinnamon flavored instant oatmeal cereal of the invention.

A sweetening composition of the invention was prepared by mixing 2.39 parts of aspartame (Nutra Sweet supplied by G. D. Searle) with 97.61 parts of Maltrin M500 maltodextrin in a blender. This sweetening composition was then used to prepare an apple-cinnamon preblend having the following composition:

|  | Percent by weight |
|---|---|
| Maltodextrin-aspartame premix | 35.43 |
| Starch | 12.23 |
| Guar gum | 5.30 |
| Salt | 5.30 |
| Vegetable oil | 5.02 |
| Coated electrolytic iron | 0.28 |
| Vitamin mix | 0.17 |
| Calcium carbonate | 1.69 |
| Artificial apple flavor | 0.17 |
| Korintji cinnamon | 2.62 |
| Fine corn cereal flakes | 27.07 |
| Caramel color | 0.54 |
| Artificial vanilla flavor | 3.16 |
|  | 100.00 |

A separate mixture of instant rolled oats, wheat flakes, barley flakes and dried apple flakes was prepared and this mixture and the preblend were fed separately to a filling maching which filled appropriate quantities of the two blends into single-serving pouchs to give a final sweetened cereal composition of the invention containing the following ingredients:

|  | Percent by weight |
|---|---|
| Apple cinnamon preblend | 18.39 |
| Instant rolled oats | 46.35 |
| Processed wheat flakes | 12.50 |
| Quick barley flakes | 12.50 |
| Dried apple flakes | 10.27 |
|  | 100.00 |

This final sweetened cereal composition comprised 0.156 percent by weight aspartame.

It has been found that the simultaneous feeding of the two blends to the filling machine avoids stratification of the preblend, which might otherwise lead to non-uniform sweetness in the final cereal composition, and also avoids damage to the cereal flakes which may occur if mechanical mixing were attempted.

Example 2

This Example illustrates the preparation of a peaches-and-cream flavored cereal composition of the invention.

The maltodextrin-aspartame sweetening composition prepared in Example 1 above was mixed, in the same manner as in Example 1, with other ingredients to prepare a peach-flavored preblend having the following composition:

# 0 197 822

|  | Percent by weight |
|---|---|
| Maltodextrin-aspartame premix | 32.31 |
| Starch | 9.94 |
| Guar gum H.V. | 4.52 |
| Salt | 3.93 |
| Malic acid | 0.67 |
| Coated electrolytic iron | 0.25 |
| Vitamin mix | 0.15 |
| Calcium carbonate | 1.52 |
| Artificial peach flavor | 0.56 |
| Artificial cream flavor | 18.49 |
| Fine corn cereal flakes | 24.68 |
| Artificial vanilla flavor | 2.98 |
|  | 100.00 |

This peach-flavored preblend was then used to prepare a final peaches-and-cream flavored sweetened cereal composition of the invention having the following composition:

|  | Percent by weight |
|---|---|
| Peach preblend | 21.09 |
| Instant oats | 45.14 |
| Processed wheat flakes | 11.75 |
| Quick barley flakes | 11.75 |
| Dried peach flavored flakes | 10.27 |
|  | 100.00 |

This final sweetened cereal composition contained 0.163 percent by weight of aspartame.

Example 3

This Example illustrates the preparation of a raisin-spice flavored sweetened cereal composition of the invention.

The maltodextrin-aspartame premix produced in Example 1 above was mixed with other ingredients in the same manner as in Example 1 to produce a raisin-spice preblend having the following composition:

|  | Percent by weight |
|---|---|
| Maltodextrin-aspartame premix | 37.77 |
| Starch | 5.71 |
| Guar gum H.V. | 4.38 |
| Salt | 4.04 |
| Vegetable oil | 6.32 |
| Coated electrolytic iron | 0.36 |
| Vitamin blend | 0.22 |
| Calcium carbonate | 2.20 |
| Korintji cinnamon | 1.88 |
| Nutmeg | 1.33 |
| Fine corn cereal flakes | 28.02 |
| Caramel color | 1.89 |
| Artificial vanilla flavor | 5.78 |
| Malic acid | 0.10 |
|  | 100.00 |

This raisin-spice preblend was then mixed with other ingredients to prepare a final raisin-spice flavored sweetened cereal composition of the invention having the following composition:

8

# 0 197 822

| | Percent by weight |
|---|---|
| Raisin-spice preblend | 15.13 |
| Instant oats | 44.42 |
| Processed wheat flakes | 12.58 |
| Quick barley flakes | 12.58 |
| Oil coated, cereal size raisins | 15.29 |
| | 100.00 |

The final sweetened cereal composition contained 0.137 percent by weight aspartame.

Example 4

This Example illustrates the preparation of a raisin-date-walnut flavored sweetened cereal composition of the invention.

The raisin-spice preblend prepared in Example 3 above was mixed with the following ingredients in the same way as in Example 1 to give a final raisin-date-walnut flavored sweetened cereal composition of the invention having the following composition:

| | Percent by weight |
|---|---|
| Raisin-spice preblend | 14.33 |
| Instant oats | 44.70 |
| Processed wheat flakes | 12.50 |
| Quick barley flakes | 12.50 |
| Oil coated, cereal size raisins | 6.85 |
| Chopped dates | 5.70 |
| Chopped walnuts | 3.42 |
| | 100.00 |

The final sweetened cereal composition comprised 0.129 percent by weight aspartame.

Example 5

This Example illustrates the preparation of a strawberry-and-cream flavored sweetened cereal composition of the invention.

The maltodextrin-aspartame premix prepared in Example 1 above was mixed in the same way as in Example 1 to produce a strawberry-flavored preblend having the following composition:

| | Percent by weight |
|---|---|
| Maltodextrin-aspartame premix | 32.31 |
| Starch | 9.90 |
| Guar gum H.V. | 4.55 |
| Salt | 3.90 |
| Malic acid | 0.33 |
| Citric acid | 1.15 |
| Artificial cream | 18.51 |
| Artificial strawberry flavors | 0.42 |
| Fine corn cereal flakes | 24.07 |
| Coated electrolytic iron | 0.32 |
| Vitamin mix | 0.16 |
| Calcium carbonate | 1.46 |
| Artificial vanilla flavor | 2.92 |
| | 100.00 |

This strawberry flavored preblend was then used to prepare a final strawberry-and-cream flavored sweetened cereal composition of the invention having the following composition:

9

**0 197 822**

|  | Percent by weight |
|---|---|
| Strawberry preblend | 21.09 |
| Instant oats | 45.14 |
| Processed wheat flakes | 11.75 |
| Quick barley flakes | 11.75 |
| Strawberry flavored flakes #188 | 10.27 |
|  | 100.00 |

The final sweetened cereal composition contained 0.163 percent by weight of aspartame.

It will be apparent to those skilled in the art that numerous changes and modifications can be made in the preferred embodiments of the invention described above without departing from the scope of the invention. Accordingly, the whole of the foregoing description is to be construed in an illustrative and not in a limitative sense, the scope of the invention being defined solely by the appended claims.

**Claims**

1. A process for producing a sweetened edible cereal composition, which process comprises mixing a pulverulent L-aspartic acid sweetening derivative with a substantially dry maltodextrin having an average particle size larger than about 200 U.S. mesh, and thereafter mixing the resultant substantially dry L-aspartic acid sweetening derivative/maltodextrin mixture with an edible flaked cereal to produce the sweetened edible cereal composition.

2. A process according to claim 1 wherein the edible cereal comprises at least one of wheat flakes, barley flakes and rolled oat flakes.

3. A process according to claim 1 wherein the L-aspartic acid sweetening derivative is aspartame.

4. A process according to claim 1 wherein the weight of L-aspartic acid sweetening agent used is from about 0.05 to about 0.5 percent by weight of the sweetened edible cereal composition.

5. A process according to claim 4 wherein the weight of L-aspartic acid sweetening agent used is from about 0.1 to about 0.2 percent by weight.

6. A process according to claim 1 wherein the maltodextrin comprises at least about 80 percent by weight of particles larger than about 200 U.S. mesh.

7. A process according to claim 1 wherein the maltodextrin comprises at least about 20 percent by weight of particles larger than 60 U.S. mesh.

8. A process according to claim 1 wherein the maltodextrin has a dextrose equivalent of from about 7 to about 15.

9. A process according to claim 8 wherein the maltodextrin has a dextrose equivalent of from about 9 to about 12.

10. A process according to claim 1 wherein the maltodextrin has a bulk density not greater than about 0,32 g/cm$^3$ (20 pounds per cubic foot).

11. A process according to claim 1 wherein from about 10 to about 200 parts by weight of maltodextrin are mixed with each part by weight of the L-aspartic acid sweetening derivative.

12. A process according to claim 11 wherein from about 20 to about 100 parts by weight of the maltodextrin are mixed with each part by weight of the L-aspartic acid sweetening derivative.

13. A process according to claim 1 wherein the L-aspartic acid sweetening derivative/maltodextrin mixture is mixed with at least one polysaccharide selected from the group consisting of gums and starches, and thereafter the resultant mixture is mixed with the edible cereal.

14. A sweetened cereal composition comprising a substantially dry mixture of flakes of an edible cereal and discrete sweetening particles, the sweetening particles comprising a maltodextrin having an average particle size larger than about 200 U.S. mesh and a pulverulent L-aspartic acid sweetening derivative adhering to the maltodextrin.

15. A composition according to claim 14 wherein the cereal flakes comprise at least one of wheat flakes, barley flakes and rolled oat flakes.

16. A composition according to claim 14 wherein the L-aspartic acid sweetening derivative is aspartame.

17. A composition according to claim 14 comprising from about 0.05 to about 0.5 percent by weight of the L-aspartic acid sweetening agent.

18. A composition according to claim 17 comprising from about 0.1 to about 0.2 percent by weight of the L-aspartic acid sweetening agent.

19. A composition according to claim 14 wherein the maltodextrin comprises at least about 80 percent by weight of particles larger than about 200 U.S. mesh.

20. A composition according to claim 14 wherein the maltodextrin comprises at least about 20 percent by weight of particles larger than 60 U.S. mesh.

21. A composition according to claim 14 wherein the maltodextrin has a dextrose equivalent of from about 7 to about 15.

22. A composition according to claim 21 wherein the maltodextrin has a dextrose equivalent of about 9 to about 12.

23. A composition according to claim 14 wherein the maltodextrin has a bulk density not greater than about 0,32 g/cm$^3$ (20 pounds per cubic foot).

24. A composition according to claim 14 wherein the sweetening particles comprise from about 10 to about 200 parts by weight of maltodextrin per part by weight of L-aspartic acid sweetening derivative.

25. A composition according to claim 24 wherein the sweetening particles comprise from about 20 to about 100 parts by weight of maltodextrin per part by weight L-aspartic acid sweetening derivative.

26. A composition according to claim 14 further comprising at least one polysaccharide selected from the group consisting of gums and starches.

27. A process for preparing a sweetening composition which process comprises mixing a pulverulent L-aspartic acid sweetening derivative with a substantially dry maltodextrin having an average particle size larger than about 200 U.S. mesh.

28. A process according to claim 27 wherein the L-aspartic acid sweetening derivative is aspartame.

29. A process according to claim 27 wherein the maltodextrin comprises at least about 80 percent by weight of particles larger than about 200 U.S. mesh.

30. A process according to claim 27 wherein the maltodextrin comprises at least about 20 percent by weight of particles larger than 60 U.S. mesh.

31. A process according to claim 27 wherein the maltodextrin has a dextrose equivalent of from about 7 to about 15.

32. A process according to claim 31 wherein the maltodextrin has a dextrose equivalent of from about 9 to about 12.

33. A process according to claim 27 wherein the maltodextrin has a bulk density not greater than about 0,32 g/cm$^3$ (20 pounds per cubic foot).

34. A process according to claim 27 wherein from about 10 to about 200 parts by weight of maltodextrin are mixed with each part by weight of the L-aspartic acid sweetening derivative.

35. A process according to claim 34 wherein from about 20 to about 100 parts by weight of maltodextrin are mixed with each part by weight of the L-aspartic acid sweetening derivative.

36. A process according to claim 27 wherein the L-aspartic acid sweetening derivative/maltodextrin mixture is thereafter mixed with at least one polysaccharide selected from the group consisting of gums and starches.

37. A solid sweetening composition comprising a substantially dry maltodextrin having an average particle size larger than about 200 U.S. mesh, and a pulverulent L-aspartic acid sweetening derivative carried on the surfaces of the maltodextrin particles.

38. A composition according to claim 37 wherein the L-aspartic acid sweetening derivative is aspartame.

39. A composition according to claim 37 wherein the maltodextrin comprises at least about 80 percent by weight of particles larger than about 200 U.S. mesh.

40. A composition according to claim 37 wherein the maltodextrin comprises at least about 20 percent by weight of particles larger than 60 U.S. mesh.

41. A composition according to claim 37 wherein the maltodextrin has a dextrose equivalent of from about 7 to about 15.

42. A composition according to claim 41 wherein the maltodextrin has a dextrose equivalent of about 9 to about 12.

43. A composition according to claim 37 wherein the maltodextrin has a bulk density not greater than about 0,32 g/cm$^3$ (20 pounds per cubic foot).

44. A composition according to claim 37 wherein the comprising from about 10 to about 200 parts by weight of maltodextrin per part by weight of L-aspartic acid sweetening derivative.

45. A composition according to claim 44 comprising from about 20 to about 100 parts by weight of maltodextrin per part by weight of L-aspartic acid sweetening derivative.

46. A composition according to claim 37 further comprising at least one polysaccharide selected from the group consisting of gums and starches.


**Patentansprüche**

1. Verfahren zur Herstellung einer gesüßten, eßbaren Getreideverbindung, gekennzeichnet durch Mischen eines pulverigen L-Asparaginsäure-Süß-Derivates mit einem im wesentlichen trockenen Maltodextrin, das eine durchschnittliche Teilchengröße größer als 0,074 mm aufweist und anschließendes Mischen der erhaltenen im wesentlichen trockenen L-Asparaginsäure-Süß-Derivat/Maltodextrin-Mischung mit einem eßbaren flockigen Getreide zur Erzeugung einer gesüßten eßbaren Getreideverbindung.

2. Verfahren nach Anspruch 1, dadurch gekennzeichnet, daß das eßbare Getreide wenigstens eines der Weizenflocken, Gerstenflocken und gequetschten Haferflocken enthält.

3. Verfahren nach Anspruch 1, dadurch gekennzeichnet, daß das L-Asparaginsäure-Süß-Derivat aspartam ist.

# 0 197 822

4. Verfahren nach Anspruch 1, dadurch gekennzeichnet, daß die Menge an L-Asparaginsäure-Süß-Mittel 0,05 bis 0,5 Gew.-% der gesüßten eßbaren Getreideverbindung beträgt.

5. Verfahren nach Anspruch 4, dadurch gekennzeichnet, daß die Menge an L-Asparaginsäure-Süß-Mittel etwa 0,1 bis 0,2 Gew.-% beträgt.

6. Verfahren nach Anspruch 1, dadurch gekennzeichnet, daß das Maltodextrin wenigstens über 80 Gew.-% Teilchen größer als 0,074 mm enthält.

7. Verfahren nach Anspruch 1, dadurch gekennzeichnet, daß das Maltodextrin wenigstens über 20 Gew.-% Teilchen größer als 0,25 mm enthält.

8. Verfahren nach Anspruch 1, dadurch gekennzeichnet, daß das Maltodextrin ein Dextrose-Äquivalent von etwa 7 bis 15 hat.

9. Verfahren nach Anspruch 8, dadurch gekennzeichnet, daß das Maltodextrin ein Dextrose-Äquivalent von etwa 9 bis 12 hat.

10. Verfahren nach Anspruch 1, dadurch gekennzeichnet, daß das Maltodextrin ein Schüttgewicht nicht größer als 0,32 g/cm$^3$ aufweist.

11. Verfahren nach Anspruch 1, dadurch gekennzeichnet, daß 10 bis etwa 200 Gewichtsteile Maltodextrin mit jedem Gewichtsteil des L-Asparaginsäure-Süß-Derivates gemischt werden.

12. Verfahren nach Anspruch 11, dadurch gekennzeichnet, daß etwa 20 bis 100 Gewichtsteile Maltodextrin mit jedem Gewichtsteil des L-Asparaginsäure-Süß-Derivat gemischt werden.

13. Verfahren nach Anspruch 1, dadurch gekennzeichnet, daß die L-Asparaginsäure-Süß-Derivat/Maltodextrin-Mischung mit wenigstens einem Polysaccharid aus der Gruppe der Gummis und Stärken gemischt wird und daß anschließend die erhaltene Mischung mit dem eßbaren Getreide gemischt wird.

14. Gesüßte Getreideverbindung gekennzeichnet durch eine im wesentlichen trockene Mischung aus Flocken eßbaren Getreides und diskreter Süßteilchen, wobei diese Süßteilchen ein Maltodextrin mit einer durchschnittlichen Teilchengröße größer als etwa 0,074 mm und ein pulveriges L-Asparaginsäure-Süß-Derivat angelagert an das Maltodextrin enthalten.

15. Verbindung nach Anspruch 14, dadurch gekennzeichnet, daß die Getreideflocken wenigstens eines der Weizenflocken, Gersteflocken und gequetschen Haferflocken enthalten.

16. Verbindung nach Anspruch 14, dadurch gekennzeichnet, daß das L-Asparaginsäure-Süß-Derivat aspartam ist.

17. Verbindung nach Anspruch 14, dadurch gekennzeichnet, daß die Menge an L-Asparaginsäure-Süß-Mittel 0,05 bis etwa 0,5 Gew.-% beträgt.

18. Verbindung nach Anspruch 17, dadurch gekennzeichnet, daß die Menge an L-Asparaginsäure-Süß-Mittel 0,1 bis etwa 0,2 Gew.-% beträgt.

19. Verbindung nach Anspruch 14, dadurch gekennzeichnet, daß das Maltodextrin wenigstens etwa 80 Gew.-% Teilchen größer als 0,074 mm enthält.

20. Verbindung nach Anspruch 14, dadurch gekennzeichnet, daß das Maltodextrin wenigstens etwa 20 Gew.-% Teilchen größer als 0,25 mm enthält.

21. Verbindung nach Anspruch 14, dadurch gekennzeichnet, daß das Maltodextrin ein Dextrose-Äquivalent von etwa 7 bis 15 aufweist.

22. Verbindung nach Anspruch 21, dadurch gekennzeichnet, daß das Maltodextrin ein Dextrose-Äquivalent von etwa 9 bis 12 aufweist.

23. Verbindung nach Anspruch 14, dadurch gekennzeichnet, daß das Maltodextrin eine Schüttdichte nicht größer als etwa 0,32 g/cm$^3$ aufweist.

24. Verbindung nach Anspruch 14, dadurch gekennzeichnet, daß die Süßteilchen etwa 10 bis etwa 200 Gewichtsteile Maltodextrin pro Gewichtsteil L-Asparaginsäure-Süß-Derivat enthalten.

25. Verbindung nach Anspruch 24, dadurch gekennzeichnet, daß die Süßteilchen etwa 20 bis etwa 100 Gewichtsteile Maltodextrin pro Gewichtsteil L-Asparaginsäure-Süß-Derivat enthalten.

26. Verbindung nach Anspruch 14, dadurch gekennzeichnet, daß wenigstens ein Polysaccharid ausgewählt aus der Gruppe bestehend aus Gummis und Stärken enthalten ist.

27. Verfahren zur Herstellung einer gesüßten Verbindung, dadurch gekennzeichnet, daß ein pulveriges L-Asparaginsäure-Süß-Derivat mit einem im wesentlichen trockenen Maltodextrin gemischt wird, das eine durchschnittliche Teilchengröße größer als etwa 0,074 mm aufweist.

28. Verfahren nach Anspruch 27, dadurch gekennzeichnet, daß das L-Asparaginsäure-Süß-Derivat aspartam ist.

29. Verfahren nach Anspruch 27, dadurch gekennzeichnet, daß das Maltodextrin wenigstens etwa 80 Gew.-% Teilchen größer als 0,074 mm enthält.

30. Verfahren nach Anspruch 27, dadurch gekennzeichnet, daß das Maltodextrin wenigstens etwa 20 Gew.-% Teilchen größer als 0,25 mm enthält.

31. Verfahren nach Anspruch 27, dadurch gekennzeichnet, daß das Maltodextrin ein Dextrose-Äquivalent von etwa 7 bis etwa 15 aufweist.

32. Verfahren nach Anspruch 31, dadurch gekennzeichnet, daß das Maltodextrin ein Dextrose-Äquivalent von etwa 9 bis etwa 12 aufweist.

33. Verfahren nach Anspruch 27, dadurch gekennzeichnet, daß das Maltodextrin eine Schüttdichte nicht größer als etwa 0,32 g/cm$^3$ aufweist.

**0 197 822**

34. Verfahren nach Anspruch 27, dadurch gekennzeichnet, daß etwa 10 bis etwa 200 Gewichtsteile Maltodextrin mit jedem Gewichtsteil des L-Asparaginsäure-Süß-Derivates gemischt werden.

35. Verfahren nach Anspruch 34, dadurch gekennzeichnet, daß etwa 20 bis etwa 100 Gewichtsteile Maltodextrin mit jedem Gewichtsteil des L-Asparaginsäure-Süß-Derivates gemischt werden.

36. Verfahren nach Anspruch 27, dadurch gekennzeichnet, daß die L-Asparaginsäure-Süß-Derivat/-Maltodextrin-Mischung anschließend mit wenigstens einem Polysaccharid ausgewählt aus der Gruppe bestehend aus Gummis und Stärken gemischt wird.

37. Fest Süßverbindung gekennzeichnet durch ein wesentlich trockenes Maltodextrin mit einer durchschnittlichen Teilchengröße nicht größer als 0,074 mm und ein pulveriges L-Asparaginsäure-Süß-Derivat getragen auf der Oberfläche der Maltodextrinteilchen.

38. Verbindung nach Anspruch 37, dadurch gekennzeichnet, daß das L-Asparaginsäure-Süß-Derivat aspartam ist.

39. Verbindung nach Anspruch 37, dadurch gekennzeichnet, daß das Maltodextrin wenigstens etwa 80 Gew.-% Teilchen größer als etwa 0,074 mm enthält.

40. Verbindung nach Anspruch 37, dadurch gekennzeichnet, daß das Maltodextrin wenigstens etwa 20 Gew.-% Teilchen größer als 0,25 mm enthält.

41. Verbindung nach Anspruch 37, dadurch gekennzeichnet, daß das Maltodextrin ein Dextrose-Äquivalent von etwa 7 bis etwa 15 aufweist.

42. Verbindung nach Anspruch 41, dadurch gekennzeichnet, daß das Maltodextrin ein Dextrose-Äquivalent von etwa 9 bis etwa 12 aufweist.

43. Verbindung nach Anspruch 37, dadurch gekennzeichnet, daß das Maltodextrin eine Schüttdichte nicht größer als etwa 0,32 g/cm³ besitzt.

44. Verbindung nach Anspruch 37, dadurch gekennzeichnet, daß sie etwa 10 bis etwa 200 Gewichtsteile Maltodextrin pro Gewichtsteil L-Asparaginsäure-Süß-Derivat enthält.

45. Verbindung nach Anspruch 44, dadurch gekennzeichnet, daß sie etwa 20 bis etwa 100 Gewichtsteile Maltodextrin pro Gewichtsteil L-Asparaginsäure-Süß-Derivat enthält.

46. Verbindung nach Anspruch 37, dadurch gekennzeichnet, daß wenigstens ein Polysaccharid ausgewählt aus der Gruppe bestehend aus Gummis und Stärken enthalten ist.

**Revendications**

1. Procédé pour réaliser une composition de céréale comestible édulcorée, lequel procédé comprend le mélange d'un dérivé édulcorant d'acide L-aspartique pulvérulent avec une maltodextrine sensiblement sèche ayant une taille de particules moyenne supérieure à environ 200 U.S. mesh, puis le mélange du mélange résultant sensiblement sec dérivé édulcorant d'acide L-aspartique/maltodextrine avec une céréale comestible en flocons pour produire la composition de céréale comestible édulcorée.

2. Procédé selon la revendication 1, dans lequel la céréale comestible comprend au moins des flocons de blé, ou des flocons d'orge, ou des flocons d'avoine roulés.

3. Procédé selon la revendication 1, dans lequel la dérivé édulcorant d'acide L-aspartique est de l'aspartame.

4. Procédé selon la revendication 1, dans lequel le poids de l'agent édulcorant d'acide L-aspartique utilisé est compris entre environ 0,05 et environ 0,5% en poids de la composition de céréale comestible édulcorée.

5. Procédé selon la revendication 4, dans lequel le poids de l'agent édulcorant d'acide L-aspartique utilisé est compris entre environ 0,1 et environ 0,2% en poids.

6. Procédé selon la revendication 1, dans lequel la maltodextrine comprend au moins environ 80% en poids de particules plus grandes qu'environ 200 U.S. mesh.

7. Procédé selon la revendication 1, dans lequel la maltodextrine comprend au moins environ 20% en poids de particules plus grandes que 60 U.S. mesh.

8. Procédé selon la revendication 1, dans lequel la maltodextrine présente un équivalent en dextrose compris entre environ 7 et environ 15.

9. Procédé selon la revendication 8, dans lequel la maltodextrine présente un équivalent en dextrose compris entre environ 9 et environ 12.

10. Procédé selon la revendication 1, dans lequel la maltodextrine a une masse volumique qui n'est pas supérieure à environ 0,32 g/cm³ (20 livres par pied cubique).

11. Procédé selon la revendication 1, dans lequel d'environ 10 à environ 200 parties en poids de maltodextrine sont mélangées à chaque partie en poids du dérivé édulcorant d'acide L-aspartique.

12. Procédé selon la revendication 11, dans lequel d'environ 20 à environ 100 parties en poids de maltodextrine sont mélangées à chaque partie en poids du dérivé édulcorant d'acide L-aspartique.

13. Procédé selon la revendication 1, dans lequel le mélange dérivé édulcorant d'acide L-aspartique/-maltodextrine est mélangé à au moins un polysaccharide choisi dans le groupe constitué de gommes et d'amidons, puis le mélange résultant est mélangé à la céréale comestible.

14. Composition de céréale édulcorée comprenant un mélange sensiblement sec de flocons d'une céréale comestible et des particules édulcorantes discontinues, les particules édulcorantes comprenant

13

une maltodextrine ayant une taille de particules moyenne supérieure à environ 200 U.S. mesh et un dérivé édulcorant d'acide L-aspartique pulvérulent adhérant à la maltodextrine.

15. Composition selon la revendication 14, dans laquelle les flocons de céréale comprennent au moins des flocons de blé, ou des flocons d'orge, ou des flocons d'avoine roulés.

16. Composition selon la revendication 14, dans laquelle le dérivé édulcorant d'acide L-aspartique est de l'aspartame.

17. Composition selon la revendication 14, comprenant d'environ 0,05 à environ 0,5% en poids de l'agent édulcorant d'acide L-aspartique.

18. Composition selon la revendication 17, comprenant d'environ 0,1 à environ 0,2% en poids d'agent édulcorant d'acide L-aspartique.

19. Composition selon la revendication 14, dans laquelle la maltodextrine comprend au moins environ 80% en poids de particules plus grandes qu'environ 200 U.S. mesh.

20. Composition selon la revendication 14, dans laquelle la maltodextrine comprend au moins environ 20% en poids de particules plus grandes que 60 U.S. mesh.

21. Composition selon la revendication 14, dans laquelle la maltodextrine présente un équivalent en dextrose compris entre environ 7 et environ 15.

22. Composition selon la revendication 21, dans laquelle la maltodextrine présente un équivalent en dextrose compris entre environ 9 et environ 12.

23. Composition selon la revendication 14, dans laquelle la maltodextrine présente une masse volumique qui n'est pas supérieure à environ 0,32 g/cm$^3$ (20 livres par pied cubique).

24. Composition selon la revendication 14, dans laquelle les particules édulcorantes comprennent entre environ 10 et environ 200 parties en poids de maltodextrine par partie en poids du dérivé édulcorant d'acide L-aspartique.

25. Composition selon la revendication 24, dans laquelle les particules édulcorantes comprennent entre environ 20 et environ 100 parties en poids de maltodextrine par partie en poids du dérivé édulcorant d'acide L-aspartique.

26. Composition selon la revendication 14, comprenant de plus au moins un polysaccharide choisi dans le groupe constitué de gommes et d'amidons.

27. Procédé poure préparer une composition édulcorante, lequel procédé comprend le mélange d'un dérivé édulcorant d'acide L-aspartique pulvérulent avec une maltodextrine sensiblement sèche ayant une taille de particules moyenne supérieure à environ 200 U.S. mesh.

28. Procédé selon la revendication 27, dans lequel le dérivé édulcorant d'acide L-aspartique est de l'aspartame.

29. Procédé selon la revendication 27, dans lequel la maltodextrine comprend au moins environ 80% en poids de particules plus grandes qu'environ 200 U.S. mesh.

30. Procédé selon la revendication 27, dans lequel la maltodextrine comprend au moins environ 20% en poids de particules plus grandes que 60 U.S. mesh.

31. Procédé selon la revendication 27, dans lequel la maltodextrine présente un équivalent en dextrose compris entre environ 7 et environ 15.

32. Procédé selon la revendication 31, dans lequel la maltodextrine présente un équivalent en dextrose compris entre environ 9 et environ 12.

33. Procédé selon la revendication 27, dans lequel la maltodextrine présente une masse volumique qui n'est pas supérieure à environ 0,32 g/cm$^3$ (20 livres par pied cubique).

34. Procédé selon la revendication 27, dans lequel d'environ 10 à environ 200 parties en poids de maltodextrine sont mélangées à chaque partie en poids du dérivé édulcorant d'acide L-aspartique.

35. Procédé selon la revendication 34, dans lequel d'environ 20 à environ 100 parties en poids de maltodextrine sont mélangées à chaque partie en poids du dérivé édulcorant d'acide L-aspartique.

36. Procédé selon la revendication 27, dans lequel le mélange dérivé édulcorant d'acide L-aspartique/-maltodextrine est ensuite mélangé à au moins un polysaccharide choisi dans le groupe constitué de gommes et d'amidons.

37. Composition édulcorante solide comprenant une maltodextrine sensiblement sèche ayant une taille de particules moyenne supérieure à environ 200 U.S. mesh, et un dérivé édulcorant d'acide L-aspartique pulvérulent porté sur les surfaces des particules de maltodextrine.

38. Composition selon la revendication 37, dans laquelle le dérivé édulcorant d'acide L-aspartique est de l'aspartame.

39. Composition selon la revendication 37, dans laquelle la maltodextrine comprend au moins environ 80% en poids de particules plus grandes qu'environ 200 U.S. mesh.

40. Composition selon la revendication 37, dans laquelle la maltodextrine comprend au moins 20% en poids de particules plus grandes que 60 U.S. mesh.

41. Composition selon la revendication 37, dans laquelle la maltodextrine présente un équivalent en dextrose compris entre environ 7 et environ 15.

42. Composition selon la revendication 41, dans laquelle la maltodextrine présente un équivalent en dextrose compris entre environ 9 et environ 12.

43. Composition selon la revendication 37, dans laquelle la maltodextrine présente une masse volumique qui n'est pas supérieure à environ 0,32 g/cm$^3$ (20 livres par pied cubique).

44. Composition selon la revendication 37, comprenant d'environ 10 à environ 200 parties en poids de maltodextrine par partie en poids du dérivé édulcorant d'acide L-aspartique.

45. Composition selon la revendication 44, comprenant d'environ 20 à environ 100 parties en poids de maltodextrine par partie en poids du dérivé édulcorant d'acide L-aspartique.

46. Composition selon la revendication 37, comprenant de plus au moins un polysaccharide choisi dans le groupe constitué de gommes et d'amidons.